# EUROPÄISCHE PATENTANMELDUNG

(11) **EP 4 094 882 A1**
(43) Veröffentlichungstag der Anmeldung: **30.11.2022**
(21) Anmeldenummer: 21176500.3
(22) Anmeldetag: 28.05.2021
(51) Int. Cl.: B23Q 1/01, B23Q 37/00

(54) **MODULARE WERKZEUGMASCHINE UND BAUREIHE VON WERKZEUGMASCHINEN**

(71) Anmelder: J.G. Weisser Söhne GmbH & Co. KG, 78112 St. Georgen (DE)
(72) Erfinder: RETTICH, Thorsten, 78050 Villingen (DE)
(74) Vertreter: Mertzlufft-Paufler, Cornelius

(57) **Zusammenfassung**

Die Erfindung betrifft eine Werkzeugmaschine (1) sowie eine Baureihe von Werkzeugmaschinen und verfolgt das Ziel, unterschiedlich konfigurierbare Werkzeugmaschinen mit einer möglichst geringen Anzahl von unterschiedlichen Einzelteilen bereitzustellen. Zu diesem Zweck wird eine Werkzeugmaschine (1) vorgeschlagen, deren Maschinengestell (3) einen Maschinenständer (4) und einen Führungsträger (2) umfasst, der in wenigstens zwei unterschiedlichen Befestigungspositionen an dem Maschinenständer (4) montierbar ist, wobei der Führungsträger (2) den Maschinenständer (4) in zumindest einer der wenigstens (2) Befestigungspositionen in Bezug auf eine Bearbeitungsseite (5) der Werkzeugmaschine (1) seitlich überragt

## Beschreibung

Die Erfindung betrifft eine Werkzeugmaschine, insbesondere eine Drehbearbeitungsmaschine, mit einem Maschinengestell, das einen Maschinenständer und einen Führungsträger umfasst.

Derartige Werkzeugmaschinen sind aus dem Stand der Technik und der Praxis in unterschiedlichsten Ausführungsformen vorbekannt. Der Führungsträger wird dazu benutzt, eine Bearbeitungseinheit, beispielsweise eine Pick-up-Spindel, der Werkzeugmaschine zwischen einer Werkstückaufnahmeposition, einer Bearbeitungsposition und einer Werkstückübergabeposition bzw. einer Werkstückaufnahmeposition zu bewegen. Ferner ist es möglich, die Bearbeitungseinheit der Werkzeugmaschine entlang des Führungsträgers und seiner daran ausgebildeten Führung auch zur Durchführung von Vorschubbewegungen und Positionierbewegungen der Bearbeitungseinheit zu positionieren.

Werkzeugmaschinen der eingangs genannten Art werden in der Regel an spezifische Kundenanforderungen angepasst. Dies kann jedoch mit beträchtlichem Aufwand verbunden sein und insbesondere die Bereithaltung unterschiedlicher Varianten von Bauteilen der Werkzeugmaschine notwendig machen. Aufgabe der Erfindung ist es daher, eine Werkzeugmaschine der eingangs genannten Art bereitzustellen, die sich mit vergleichsweise geringem Aufwand an spezifische Kundenanforderungen anpassen lässt.

Zur Lösung dieser Aufgabe wird eine Werkzeugmaschine mit den Mitteln und Merkmalen des unabhängigen, auf eine Werkzeugmaschine gerichteten Anspruchs vorgeschlagen. Insbesondere wird zur Lösung der Aufgabe eine Werkzeugmaschine der eingangs genannten Art vorgeschlagen, bei der der Führungsträger in wenigstens zwei unterschiedlichen Befestigungspositionen an dem Maschinenständer montierbar ist, wobei der Führungsträger den Maschinenständer in zumindest einer der wenigstens zwei Befestigungspositionen in Bezug auf eine Bearbeitungsseite der Werkzeugmaschine seitlich überragt.

Auf diese Weise wird eine Werkzeugmaschine bereitgestellt, deren Führungsträger in zumindest zwei unterschiedlichen Befestigungspositionen an dem Maschinenständer der Werkzeugmaschine montiert werden kann. So kann die Werkzeugmaschine mit unverändertem Maschinenständer und unverändertem Führungsträger in zumindest zwei unterschiedlichen Konfigurationen angeboten werden.

Mithilfe des zumindest in einer der zwei Befestigungspositionen den Maschinenständer seitlich überragenden Führungsträgers ist es ferner möglich, eine Werkstückzuführung und/oder eine Werkstückabführung der Werkzeugmaschine an zumindest einer von zwei unterschiedlichen Seiten des Maschinenständers der Werkzeugmaschine vorzusehen. Auf diese Weise kann die Werkzeugmaschine an diesbezügliche Kundenwünsche einfach angepasst werden. Ferner begünstigt die erfindungsgemäße Werkzeugmaschine auch die Zuführung und Abführung von Werkstücken. Dadurch, dass der Führungsträger den Maschinenständer in wenigstens einer der zumindest zwei unterschiedlichen Befestigungspositionen seitlich überragt, kann ein unterhalb eines Abschnitts des Führungsträgers, der seitlich über den Maschinenständer ragt, zur direkten Zuführung von Werkstücken an die Werkzeugmaschine genutzt werden. Insbesondere wenn die Werkzeugmaschine eine Pick-up-Einheit, insbesondere eine Pick-up-Spindel, aufweist, die entlang des Führungsträgers bewegbar ist, kann auf zusätzliche Handhabungseinheiten zum Einlegen und zur Entnahme von Werkstücken in die Werkzeugmaschine und aus der Werkzeugmaschine verzichtet werden. Mithilfe einer derartigen Pick-up-Spindel ist dies dann direkt möglich.

Zur Befestigung des Führungsträgers an dem Maschinenständer kann zwischen dem Maschinenständer und dem Führungsträger eine Befestigungsschnittstelle ausgebildet sein, durch die die zumindest zwei unterschiedlichen Befestigungspositionen des Führungsträgers an dem Maschinenständer definiert sind.

Benachbart zu dem Maschinenständer kann die Werkzeugmaschine eine Materialzuführung aufweisen. Diese Materialzuführung kann zumindest zum Teil unterhalb des Führungsträgers angeordnet sein, wenn dieser in der Befestigungsposition befindlich ist, in der er den Maschinenständer seitlich überragt. Unterhalb des Führungsträgers kann ein zu bearbeitendes Werkstück zur Aufnahme bereitgehalten werden. Wenn die Werkzeugmaschine ein Aufnahmeelement, beispielsweise eine Pick-up-Spindel, umfasst, kann dieses entlang des Führungsträgers bis in eine Aufnahmeposition bewegt werden, in der es oberhalb des bereitgehaltenen Werkstücks angeordnet ist und dieses aufnehmen kann. Ebenso ist es möglich, ein mit der Werkzeugmaschine bearbeitetes Werkstück mithilfe eines, beispielsweise des bereits zuvor erwähnten, Aufnahmeelements einer Materialabführung zuzuführen, die unterhalb des den Maschinenständer seitlich überragenden Abschnitts des Führungsträgers angeordnet ist.

Selbstverständlich können die Materialabführung und die Materialzuführung mit ein und derselben Funktionseinheit der Werkzeugmaschine erfolgen. Diese kann der Einfachheit halber als Materialzuführung bezeichnet werden.

Bei einer Ausführungsform der Werkzeugmaschine kann der Führungsträger so lang ausgebildet sein, dass der Führungsträger den Maschinenständer in wenigstens einer der wenigstens zwei Befestigungspositionen an zwei, einander entgegengesetzten Seiten des Maschinenständers überragt. Auf diese Weise ist es möglich, auf der einen Seite des Maschinenständers eine Materialzuführung der Werkzeugmaschine vorzusehen, während an der entgegengesetzten Seite des Maschinenständers eine Materialabführung der Werkzeugmaschine angeordnet ist. Zwischen der Materialzuführung und der Materialabführung kann dann ein Bearbeitungsraum der Werkzeugmaschine vorgesehen sein, der an der Bearbeitungsseite der Werkzeugmaschine ausgebildet ist. So ist es möglich, ein über die Materialzuführung bereitgehaltenes Werkstück auf der einen Seite des Maschinenständers aufzunehmen und dem Bearbeitungsraum an der Bearbeitungsseite der Werkzeugmaschine zuzuführen. Nach abgeschlossener Bearbeitung des Werkstücks kann dieses beispielsweise mithilfe einer Pick-up-Spindel der Werkzeugmaschine aus dem Bearbeitungsraum an der Bearbeitungsseite der Werkzeugmaschine entnommen und der Materialabführung an der anderen Seite des Maschinenständers zugeführt werden.

Aus statischen Gründen kann es besonders vorteilhaft sein, wenn der Führungsträger auf den Maschinenständer aufgesetzt ist. Insbesondere bei schweren Werkstücken, die mithilfe des Führungsträgers an der Werkzeugmaschine bewegt werden sollen, kann eine derartige auf dem Maschinenständer ruhende Anordnung des Führungsträgers günstig für eine Krafteinleitung sein. Ferner können so möglicherweise auftretende Torsionskräfte, die über den Führungsträger auf den Maschinenständer des Maschinengestells der Werkzeugmaschine abgeleitet werden müssen, reduziert oder gar vollständig vermieden werden.

Der Führungsträger kann zur hängenden Führung zumindest einer Bearbeitungseinheit und/oder einer Pick-up-Einheit der Werkzeugmaschine eingerichtet sein. Als Bearbeitungseinheit kann beispielsweise eine Bearbeitungsspindel verwendet werden. Besonders vorderteilhaft ist die Verwendung einer Pick-up-Spindel als Bearbeitungseinheit und Pick-up-Einheit. Eine Pick-up-Spindel kann für die Aufnahme und Abgabe des Werkstücks und zudem auch für die Bearbeitung des Werkstücks verwendet werden.

Der Führungsträger kann eine Führungsbahn aufweisen, die entlang der Bearbeitungsseite der Werkzeugmaschine verläuft und/oder die der Bearbeitungsseite der Werkzeugmaschine zugewandt ist. Entlang der Führungsbahn des Führungsträgers kann die Bearbeitungseinheit und/oder die bereits zuvor erwähnte Pick-up-Einheit verfahren werden. Besonders vorteilhaft ist es, wenn sich die Führungsbahn über die gesamte Länge des Führungsträgers oder zumindest über einen wesentlichen Teil der gesamten Länge des Führungsträgers erstreckt. Eine Länge der Führungsbahn kann größer als eine in der Erstreckungsrichtung der Führungsbahn größte messbare Breite des Maschinenständers sein. Die Führungsbahn kann durch Endkappen, die an dem Führungsträger angeordnet sind, begrenzt sein.

Der Führungsträger kann mittels einer lösbaren, in Befestigungsstellung jedoch fixen Verbindung mit dem Ständer in zumindest einer, vorzugsweise in jeder der wenigstens zwei Befestigungspositionen mit dem Ständer verbindbar sein. Ferner ist es möglich, den Führungsträger mittels eines Antriebs der Werkzeugmaschine zwischen den wenigstens zwei Befestigungspositionen zu verstellen. Dies ermöglicht die automatische Veränderung der Werkzeugmaschine, durch die sich der Führungsträger von der einen in die zumindest eine weitere Befestigungsposition quasi per Knopfdruck verstellen lässt.

Bei einer Ausführungsform der Werkzeugmaschine kann die Position des Führungsträgers an dem Ständer in zwei oder drei Raumrichtungen, zum Beispiel jeweils entlang einer x-Achse, einer y-Achse und einer z-Achse der Werkzeugmaschine, verändert werden. Hierfür kann eine entsprechende Führung zwischen dem Führungsträger und dem Ständer ausgebildet sein. Die Position des Führungsträgers kann mithilfe eines, beispielsweise mithilfe des bereits zuvor erwähnten, Antriebs automatisch erfolgen.

Bei einer Ausführungsform der Werkzeugmaschine ist vorgesehen, dass die Verbindung zwischen dem Maschinenständer und dem Führungsträger durch eine Schraubverbindung und/oder durch eine Verklebung gebildet ist. Eine Schraubverbindung kann vorteilhaft sein, da sie sich mit vergleichsweise geringem Aufwand lösen lässt. So kann der Führungsträger relativ einfach in die zumindest eine andere Befestigungsposition an dem Maschinenständer verlegt werden. Die Verwendung einer gegebenenfalls zusätzlichen Verklebung zur Herstellung der Verbindung zwischen dem Maschinenständer und dem Führungsträger kann die Festigkeit der Verbindung begünstigen. Ferner kann eine Verklebung auch dämpfende Eigenschaften haben, was unter anderem vorteilhaft für die Bearbeitungsgenauigkeit der Werkzeugmaschine sein kann.

Bei einer Ausführungsform der Werkzeugmaschine kann der Führungsträger in einer Querrichtung relativ zu dem Maschinenständer, insbesondere motorisch, verstellbar sein. Die Querrichtung kann zu einer Verschiebungsrichtung des Führungsträgers zwischen seinen wenigstens zwei Befestigungspositionen an dem Maschinenständer ausgerichtet sein. Ferner kann die Querrichtung quer oder rechtwinklig zu einer Ausrichtung einer, beispielsweise der bereits zuvor erwähnten Führungsbahn des Führungsträgers sein. Durch die Verstellbarkeit des Führungsträgers in der Querrichtung ist es möglich, Vorschubbewegungen und/oder Positionierbewegungen, die bei der Bearbeitung eines Werkstücks auf der Werkzeugmaschine erforderlich sein können, mithilfe des Führungsträgers auszuführen.

Hierfür kann es vorteilhaft sein, wenn der Führungsträger mittels einer Lagerung, insbesondere mittels einer Gleitlagerung und/oder einer Wälzlagerung, an dem Maschinenständer beweglich, insbesondere längsverschieblich gelagert ist.

Bei einer Ausführungsform der Werkzeugmaschine kann der Führungsträger drehbar gelagert an dem Maschinenständer angeordnet sein. Hierfür kann zwischen dem Führungsträger und dem Maschinenständer eine entsprechende Lagerung ausgebildet sein.

Ferner wird zur Lösung der Aufgabe auch eine Baureihe von Werkzeugmaschinen vorgeschlagen, wie sie mit dem unabhängigen, auf eine solche Baureihe gerichteten Anspruch beansprucht wird. Die Baureihe ist dadurch gekennzeichnet, dass sie zumindest zwei Werkzeugmaschinen nach einem der auf eine Werkzeugmaschine gerichteten Ansprüche umfasst, wobei sich diese zumindest zwei Werkzeugmaschinen zumindest durch die Länge ihres jeweiligen Führungsträgers voneinander unterscheiden.

Auf diese Weise ist es möglich, mit Hilfe einer vergleichsweise geringen Anzahl unterschiedlicher Bauteile eine Baureihe von Werkzeugmaschinen bereitzustellen, die eine Vielzahl von unterschiedlich konfigurierbaren Werkzeugmaschinen umfasst.

Nachstehend sind Ausführungsbeispiele der Erfindung anhand der Zeichnung näher beschrieben. Weitere Ausführungsbeispiele ergeben sich durch Kombination der Merkmale einzelner oder mehrerer Schutzansprüche untereinander und/oder in Kombination einzelner oder mehrerer Merkmale der gezeigten Ausführungsbeispiele. Es zeigen in zum Teil schematisierter Darstellung:
- Fig. 1:: eine Frontalansicht einer Werkzeugmaschine in einer ersten Konfiguration mit einem Führungsträger, der in einer ersten von zwei Befestigungspositionen an einem Maschinenständer angeordnet ist, in der er den Maschinenständer der Werkzeugmaschine rechtsseitig überragt,
- Fig. 2:: eine Frontalansicht der Werkzeugmaschine aus Figur 1 in einer zweiten Konfiguration, in der der Führungsträger den Maschinenständer der Werkzeugmaschine linksseitig überragt,
- Fig. 3:: eine Frontalansicht einer weiteren Werkzeugmaschine aus dergleichen Baureihe wie die Werkzeugmaschine aus den Figuren 1 und 2, wobei diese Werkzeugmaschine einen Führungsträger aufweist, der in der gezeigten Befestigungsposition den Maschinenständer der Werkzeugmaschine beidseitig überragt,
- Fig. 4:: eine Frontalansicht der in Figur 3 gezeigten Werkzeugmaschine mit dem Führungsträger in einer zweiten Befestigungsposition an dem Maschinenständer, in der er den Maschinenständer rechtsseitig überragt,
- Fig. 5:: eine Frontalansicht der in den Figuren 3 und 4 gezeigten Werkzeugmaschine mit dem Führungsträger in einer dritten Befestigungsposition an dem Maschinenständer, in der er den Maschinenständer linksseitig überragt, sowie
- Fig. 6:: eine Seitenansicht der in den vorherigen Figuren gezeigten Werkzeugmaschine.

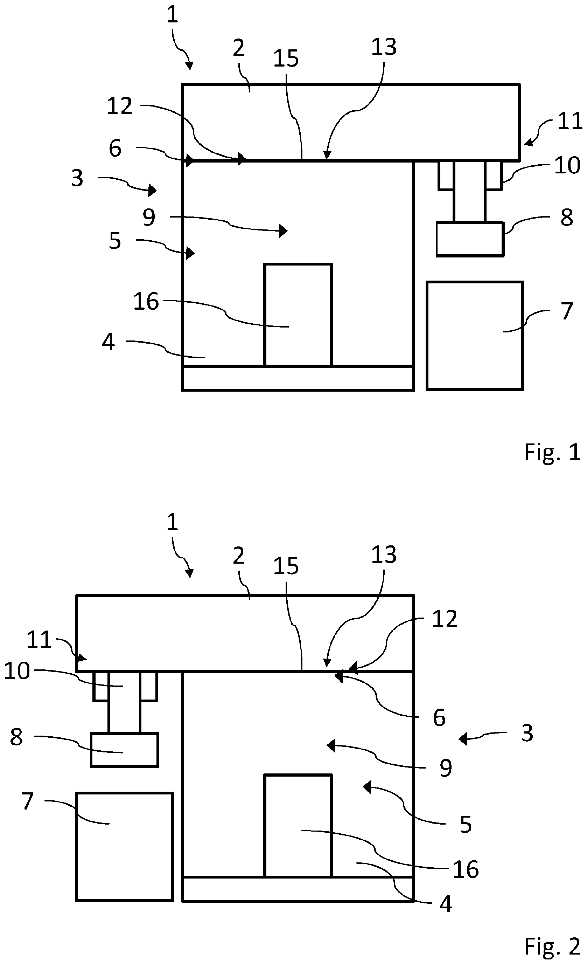

Die Figuren 1 bis 6 veranschaulichen eine Baureihe von im Ganzen jeweils mit 1 bezeichneten Werkzeugmaschinen. Die Baureihe von Werkzeugmaschinen 1 umfasst zumindest zwei Werkzeugmaschinen 1, die sich durch eine Länge ihrer jeweiligen Führungsträger 2 voneinander unterscheiden.

Jede der gezeigten Werkzeugmaschinen 1 weist ein Maschinengestell 3 auf, das einen Maschinenständer 4 und den bereits zuvor erwähnten Führungsträger 2 umfasst. Der Führungsträger 2 kann bei jeder der gezeigten Werkzeugmaschinen 1 in wenigstens zwei unterschiedlichen Befestigungspositionen an dem Maschinenständer 4 montiert werden. Der Führungsträger 2 überragt den Maschinenständer 4 in zumindest einer der wenigstens zwei Befestigungspositionen in Bezug auf eine Bearbeitungsseite 5 der Werkzeugmaschine 1 seitlich. Führungsträger 2, die den Maschinenständer 4 der jeweiligen Werkzeugmaschine 1 seitlich überragen, sind in sämtlichen Figuren zu erkennen.

Zwischen jedem Maschinenständer 4 und Führungsträger 2 ist eine Befestigungsschnittstelle 6 ausgebildet, durch die die zumindest zwei unterschiedlichen Befestigungspositionen des Führungsträgers 2 an dem Maschinenständer 4 definiert sind. Sämtliche Figuren zeigen, dass die Werkzeugmaschine 1 benachbart zu dem Maschinengestell 3 und dem Maschinenständer 4 eine Materialzuführung 7 aufweist. Die Materialzuführungen 7 sind zumindest zum Teil unterhalb des Führungsträgers 2 angeordnet, wenn dieser in der Befestigungsposition befindlich ist, in der er den Maschinenständer 4 seitlich überragt. Die Materialzuführungen 7 werden dazu verwendet, zu bearbeitende Werkstücke 8 den Werkzeugmaschinen 1 zuzuführen. Ferner können die Materialzuführungen 7 auch dazu verwendet werden, fertig bearbeitete Werkstücke 8 aufzunehmen und nachgelagerten Prozessen zuzuführen.

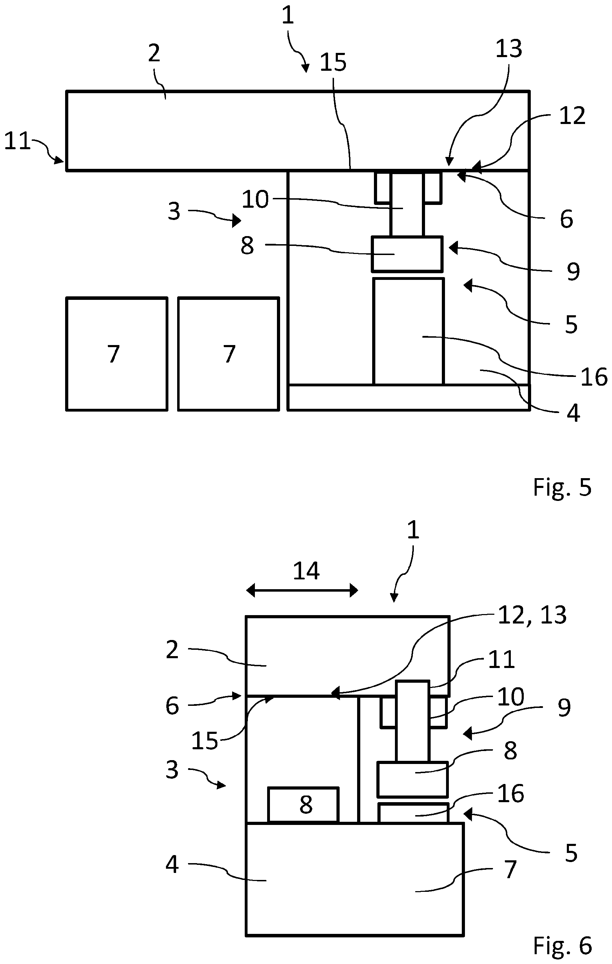

Je nach Anordnung der Führungsträger 2 auf den Maschinenständern 4 befindet sich die Materialzuführung 7 auf einer bei Betrachtung der Bearbeitungsseite 6 der Werkzeugmaschine 1 rechten Seite des Maschinenständers 4 (vergleiche Figuren 1, 3 und 4) bzw. auf einer linken Seite des Maschinenständers 4 (vergleiche Figuren 2 und 5).

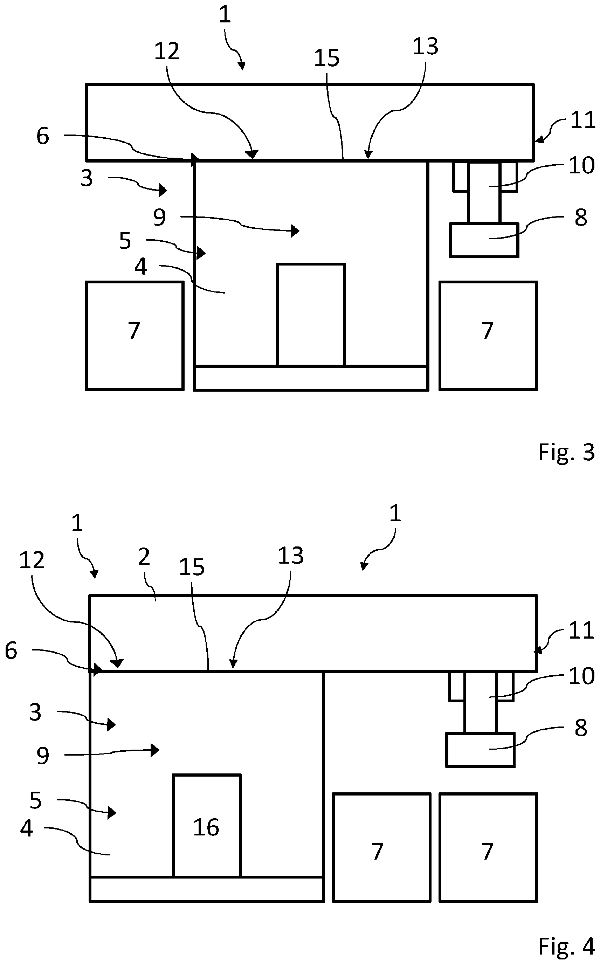

Bei der in Figur 3 gezeigten Ausführungsform der Werkzeugmaschine 1 ist der Führungsträger 2 so lang und so an dem Maschinenständer 4 angeordnet, dass er den Maschinenständer 4 an einander entgegengesetzten Seiten des Maschinenständers 4 beidseitig überragt.

Diese Ausführungsform einer Werkzeugmaschine 1 weist zwei Materialzuführungen 7 auf, von denen jeweils eine an einer Seite benachbart zu dem Maschinenständer 4 angeordnet ist. Auf diese Weise ist es möglich, ein Werkstück 8 an einer der beiden Materialzuführungen 7 aufzugreifen und einem Bearbeitungsraum 9 an der Bearbeitungsseite 5 der Werkzeugmaschine 1 zuzuführen. Nach erfolgter Bearbeitung des Werkstücks 8 kann dieses entweder auf derselben Materialzuführung 7 oder auf der an der gegenüberliegenden Seite befindlichen zweiten Materialzuführung 7 abgelegt werden.

Bei sämtlichen gezeigten Werkzeugschienen 1 ist der Führungsträger 2 auf den Maschinenständer 4 aufgesetzt, was günstig für die Statik der Werkzeugmaschine 1 und ihres Maschinengestells 3 ist.

Sämtliche Figuren verdeutlichen, dass der Führungsträger 2 jeder gezeigten Werkzeugmaschine 1 zur hängenden Führung zumindest einer Bearbeitungseinheit 10 eingerichtet ist. Die in den Figuren gezeigten Bearbeitungseinheiten 10 sind sogenannte Pick-up-Spindeln 10, mit denen bereitgehaltene Werkstücke 8 von den Materialführungen 7 aufgenommen und im Bearbeitungsraum 9 der jeweiligen Werkzeugmaschine 1 bearbeitet werden können. Nach erfolgter Bearbeitung werden die Pick-up-Spindeln 10 dazu verwendet, das bearbeitete Werkstück 8 wieder auf einer der verfügbaren Materialzuführungen 7, die dann als Materialabführungen verwendet werden, abzulegen. Die Bearbeitungseinheiten 10 fungieren somit zeitweise auch als Werkstückträger.

Jeder der gezeigten Führungsträger 2 weist eine Führungsbahn 11 auf, die entlang der Bearbeitungsseite 5 der Werkzeugmaschine 1 verläuft. Dabei ist eine Länge der jeweiligen Führungsbahn 11 größer als eine in der Erstreckungsrichtung der Führungsbahn 11 größte messbare Breite des Maschinenständers 4.

Der Führungsträger 2 ist mittels einer lösbaren, in Befestigungsstellung jedoch fixen Verbindung mit dem Maschinenständer 4 verbunden. Die Verbindung zwischen dem Maschinenständer 4 und dem Führungsträger 2 umfasst eine Schraubverbindung 12 und/oder eine Verklebung 13.

Bei einer Ausführungsform der Werkzeugmaschine 1 ist vorgesehen, dass der Führungsträger 2 mittels eines Antriebs der Werkzeugmaschine 1 zwischen den wenigstens zwei Befestigungspositionen verstellt werden kann.

Bei einer Ausführungsform der Werkzeugmaschine 1 ist der Führungsträger 2 in einer Querrichtung relativ zu dem Maschinenständer 4 motorisch verstellbar. Die Querrichtung kann dabei quer zu einer Verschiebungsrichtung des Führungsträgers 2 zwischen den wenigstens zwei Befestigungspositionen an dem Maschinenständer 4 ausgerichtet sein. In der Seitenansicht gemäß Figur 6 ist diese in Querrichtung mögliche Verschiebung des Führungsträgers 2 relativ zu dem Maschinenständer 4 anhand des Doppelpfeils 14 verdeutlicht.

Der Führungsträger 2 ist zu diesen Zwecken mittels einer Lagerung 15, die beispielsweise als Geleitlagerung und/oder als Wälzlagerung ausgebildet sein kann, beweglich an dem Maschinenständer 4 gelagert.

Ferner kann der Führungsträger 2 auch drehbar gelagert an dem Maschinenständer 4 angeordnet sein. Hierfür kann zwischen dem Führungsträger 2 und dem Maschinenständer 4 eine entsprechende Lagerung ausgebildet sein.

Innerhalb des Bearbeitungsraums 9 weist jede Werkzeugmaschine 1 mindestens ein Bearbeitungswerkzeug 16 zur Bearbeitung eines Werkstücks 8 auf. Mithilfe der Pick-up-Spindel 10 kann ein Werkstück 8 dem Bearbeitungswerkzeug 16 zur Bearbeitung zugeführt werden.

Die Werkzeugmaschinen 1 aus der zu vorgenannten Baureihe unterscheiden sich durch die Länge ihrer Führungsträger 2 voneinander. Die in den Figuren 1 und 2 gezeigten Werkzeugmaschinen 1 repräsentieren dabei eine erste Ausführungsform einer Werkzeugmaschine 1 der Baureihe.

Die in den Figuren 3 bis 5 gezeigte Werkzeugmaschine 1 repräsentiert eine weitere Ausführungsform einer Werkzeugmaschine 1 aus derselben Baureihe.

Die Erfindung betrifft eine Werkzeugmaschine 1 sowie eine Baureihe von Werkzeugmaschinen 1 und verfolgt das Ziel, unterschiedlich konfigurierbare Werkzeugmaschinen 1 mit einer möglichst geringen Anzahl von unterschiedlichen Einzelteilen bereit zu stellen. Zu diesem Zweck wird eine Werkzeugmaschine 1 vorgeschlagen, deren Maschinengestell 3 einen Maschinenständer 4 und einen Führungsträger 2 umfasst, der in wenigstens zwei unterschiedlichen Befestigungspositionen an dem Maschinenständer 4 montierbar ist, wobei der Führungsträger 2 den Maschinenständer 4 in zumindest einer der wenigstens zwei Befestigungspositionen in Bezug auf eine Bearbeitungsseite 5 der Werkzeugmaschine 1 seitlich überragt.

### Bezugszeichenliste

- 1: Werkzeugmaschine
- 2: Führungsträger
- 3: Maschinengestell
- 4: Maschinenständer
- 5: Bearbeitungsseite
- 6: Befestigungsschnittstelle
- 7: Materialzuführung
- 8: Werkstück
- 9: Bearbeitungsraum
- 10: Bearbeitungseinheit, Pick-up-Spindel
- 11: Führungsbahn
- 12: Schraubverbindung
- 13: Verklebung
- 14: Doppelpfeil
- 15: Lagerung zwischen 2 und 4
- 16: Bearbeitungswerkzeug

## Patentansprüche

1. Werkzeugmaschine (1), insbesondere Drehbearbeitungsmaschine (1), mit einem Maschinengestell (3), das einen Maschinenständer (4) und einen Führungsträger (2) umfasst, wobei der Führungsträger (2) in wenigstens zwei unterschiedlichen Befestigungspositionen an dem Maschinenständer (4) montierbar ist und wobei der Führungsträger (2) den Maschinenständer (4) in zumindest einer der wenigstens zwei Befestigungspositionen in Bezug auf eine Bearbeitungsseite (5) der Werkzeugmaschine (1) seitlich überragt.

2. Werkzeugmaschine (1) nach Anspruch 1, wobei zwischen dem Maschinenständer (4) und dem Führungsträger (2) eine Befestigungsschnittstelle (6) ausgebildet ist, durch die die zumindest zwei unterschiedlichen Befestigungspositionen des Führungsträgers (2) an dem Maschinenständer (4) definiert sind.

3. Werkzeugmaschine (1) nach Anspruch 1 oder 2, wobei die Werkzeugmaschine (1) benachbart zu dem Maschinenständer (4) eine Materialzuführung (7) aufweist, insbesondere die zumindest zum Teil unterhalb des Führungsträgers (2) angeordnet ist, wenn dieser in der Befestigungsposition befindlich ist, in der er den Maschinenständer (4) seitlich überragt.

4. Werkzeugmaschine (1) nach einem der vorherigen Ansprüche, wobei der Führungsträger (2) den Maschinenständer (4) in wenigstens einer der wenigstens zwei Befestigungspositionen an zwei, einander entgegengesetzten Seiten des Maschinenständers (4) überragt.

5. Werkzeugmaschine (1) nach einem der vorherigen Ansprüche, wobei der Führungsträger (2) auf den Maschinenständer (4) aufgesetzt ist.

6. Werkzeugmaschine (1) nach einem der vorherigen Ansprüche, wobei der Führungsträger (2) zur hängenden Führung zumindest einer Bearbeitungseinheit (10) und/oder einer Pick-up-Einheit (10), insbesondere einer Bearbeitungsspindel (10) und/oder einer Pick-up-Spindel (10), eingerichtet ist, und/oder dass der Führungsträger (2) eine Führungsbahn (11) aufweist, die entlang der Bearbeitungsseite (5) der Werkzeugmaschine (1) verläuft und/oder die der Bearbeitungsseite (5) der Werkzeugmaschine (1) zugewandt ist.

7. Werkzeugmaschine (1) nach einem der vorherigen Ansprüche, wobei der Führungsträger (2) mittels einer lösbaren, in Befestigungsstellung fixen Verbindung mit dem Maschinenständer (4) in zumindest einer, vorzugsweise in jeder der wenigstens zwei Befestigungspositionen, mit dem Ständer verbindbar ist, und/oder dass der Führungsträger (2) mittels eines Antriebs der Werkzeugmaschine (1) zwischen den wenigstens zwei Befestigungspositionen verstellbar ist.

8. Werkzeugmaschine (1) nach einem der vorherigen Ansprüche, wobei eine oder die Verbindung zwischen dem Maschinenständer (4) und dem Führungsträger (2) durch eine Schraubverbindung (12) und/oder durch eine Verklebung (13) gebildet ist.

9. Werkzeugmaschine (1) nach einem der vorherigen Ansprüche, wobei der Führungsträger (2) in einer Querrichtung relativ zu dem Maschinenständer (4), insbesondere motorisch, verstellbar ist, die quer zu einer Verschiebungsrichtung zwischen den wenigstens zwei Befestigungspositionen des Führungsträgers (2) an dem Maschinenständer (4) ausgerichtet ist.

10. Werkzeugmaschine (1) nach einem der vorherigen Ansprüche, wobei der Führungsträger (2) mittels einer Lagerung (15), insbesondere mittels einer Gleitlagerung und/oder mittels einer Wälzlagerung, an dem Maschinenständer (4) beweglich, insbesondere längsverschieblich und/oder drehbar, gelagert ist.

11. Baureihe von Werkzeugmaschinen (1), die zumindest zwei Werkzeugmaschinen (1) nach einem der vorherigen Ansprüche umfasst, die sich durch die Länge ihrer Führungsträger (2) voneinander unterscheiden.
